# EUROPEAN PATENT SPECIFICATION

(11) **EP 3 533 521 B1**
(45) Date of publication and mention of the grant of the patent: **09.06.2021**
(21) Application number: 16919641.7
(22) Date of filing: 28.10.2016
(51) Int. Cl.: B01L 3/02, G01N 35/10

(54) **PIPETTE TIP AND PIPETTE SYSTEM**
PIPETTENSPITZE UND PIPETTENSYSTEM
POINTE DE PIPETTE ET SYSTÈME DE PIPETTE

(43) Date of publication of application: 04.09.2019
(73) Proprietor: Boditech Med Inc., Chuncheon-si, Gangwon-do 24398 (KR)
(72) Inventor: CHOI, Eui Yul, Chuncheon-si Gangwon-do 24214 (KR); OH, Young Jin, Chuncheon-si Gangwon-do 24403 (KR); KIM, Byeong Chul, Chuncheon-si Gangwon-do 24300 (KR); CHONG, Kyong Hwa, Goyang-si Gyeonggi-do 10371 (KR)
(74) Representative: De Vries & Metman
(86) International application number: PCT/KR2016/012256
(87) International publication number: WO 2018/079884

(56) References cited:
- WO-A1-2010/103179
- WO-A2-2012/012779
- JP-A- 2007 209 478
- JP-A- 2007 315 793
- JP-A- 2008 151 777
- KR-A- 880 002 572
- KR-A- 20090 014 161
- KR-A- 20170 017 051
- US-A1- 2007 081 159
- US-A1- 2007 081 159

## Description

### Technical Field

The present invention relates generally to a pipette tip for facilitating collection of a fixed volume of a sample, and a pipette system including the same. More particularly, the present invention relates to a pipette tip capable of collecting a relatively large-volume liquid sample using a capillary tube, and a pipette system capable of collecting, transferring, and dispensing of the liquid sample using the pipette tip.

### Background Art

As well known in the art, pipettes are thin tubes of glass or plastic used for measuring and dispensing liquids. The pipettes come in various designs depending on application purposes, such as a mess pipette, a hole pipette, a dropping pipette, a Pasteur pipette, an automatic pipette, and the like.

In clinical immunoassay, pipette tips are used to collect, mix, and dispense a fixed volume of a sample. For analysis, an experimenter manually tests a sample with a pipette that has a volume suitable for collecting a fixed volume of the sample to be collected. Meanwhile, various automated instruments, which make such a test easy and make it possible to simultaneously test many samples, have been developed and popularized.

An automated instrument refers to a clinical test instrument that can automatically process (dispense and pretreat) a sample more than once through an onboard software. Such an automated instrument is disadvantageous in that several tens of times more samples are required than a required volume of a sample to be collected for measurement.

As a specific example, in the case of an automated instrument for testing and measuring proteins present in human blood, a method of collecting 5 mL or more of venous blood for a test and storing the venous blood to be tested in a predetermined tube is used. In this case, the volume of blood actually used for measurement practice is 10µl. However, such an automated instrument requires that several milliliters of blood be contained in a blood tube, and if not, automatic collection is impossible. Usually, 10 µl of blood can be collected by using capillary blood from a fingertip. However, it is impossible for the automated instrument to use such capillary blood. Additionally, infants and children or patients who have deep blood vessels and are difficult to collect blood therefrom may suffer psychological distress of blood collection and difficulty of blood collection itself.

### Documents of Related Art

A pipette tip according to the preamble of the main claim is known from US 2007/081159 A1.

### Disclosure

### Technical Problem

Accordingly, the present invention has been made to resolve above problems occurring in the related art, and an objective of the present invention is to provide a pipette tip capable of collecting a small fixed volume of a sample even without using a pipette, and a pipette system capable of conveniently performing pretreatment of mixing the liquid sample with a pretreatment solution by using the pipette tip.

### Technical Solution

In order to accomplish the above objective, according to one aspect of the present invention, there is provided a pipette tip in accordance with the main claim, including: a sample collection part having a capillary tube formed in a longitudinal direction for introducing samples; and a barrel body having a sample storage chamber which communicates with the capillary tube through a stepped portion and stores the samples.

The stepped portion has an inclination angle with the capillary tube of equal to or greater than 45°.

The capillary tube includes: a first capillary tube formed in a front opening and a second capillary tube having a smaller cross-sectional area from that of the first capillary tube and communicating therewith and with the stepped portion.

The capillary tube may have a cross section of an elongated circle or of a cross.

According to another aspect of the present invention, there is provided a pipette system, comprising: a pipette tip as set forth above; a handler configured to control pressure inside the pipette tip by a pressure source that is secured to an end of the barrel body and is controlled by an electrical control signal.

The handler includes: an adapter having a flow path formed therethrough, and fitted to an opening of the barrel body; a pump controlling the pressure inside the pipette tip through the adapter by the electrical control signal input from outside.

The handler further includes: a guide part guiding movement of the adapter between a site where the pipette tip is located and a site where a reagent cartridge is located; a driving part generating a driving force for controlling the movement of the adapter along the guide part; and a control unit generating an electrical control signal for controlling operation of the pump and the driving part.

### Advantageous Effects

As described above, a pipette tip according to the present invention includes a sample collection part having a capillary tube and a barrel body having a storage chamber that extends from a rear end of the capillary tube through a stepped portion. Therefore, the present invention can collect a fixed volume of a liquid sample using a capillary tube that is designed to have a predetermined volume. This makes it possible to perform an accurate test for a small-volume sample such as capillary blood.

Due to the fact that a pipette tip according to the related art itself does not have a function of aspirating a predetermined volume of a sample, a method of setting a volume of the sample to be collected by using a volume setting function of a pipette is used. However, in the present invention, it is possible for a pipette tip itself the present invention can be utilized in automated analyzers, thus enabling an automated analysis using a small-volume sample such as capillary blood.

Furthermore, a pipette system according to the present invention can conveniently mix a sample with a pretreatment solution and dispense the sample, by using a pipette tip capable of collecting a fixed volume of a sample using capillary action.

### Description of Drawings

FIG. 1 is a sectional view showing a pipette tip.
FIGS. 2a to 2f are views showing various embodiments of flat cross-section of a capillary tube of the pipette tip according to the present invention.
FIG. 3 is an enlarged sectional view showing a sample collection part of a pipette tip according to the present invention.
FIGS. 4a to 4f are views showing a method of using the pipette tip according to the present invention.
FIG. 5 is a view showing a configuration of a pipette system according to the present invention.

### Best Mode

In the following description, the structural or functional description specified to exemplary embodiments according to the present invention is intended to describe the exemplary embodiments, so it should be understood that the present invention may be variously embodied, without being limited to the exemplary embodiments. It should be understood that the exemplary embodiments according to the present invention are not limited to the embodiments which will be described hereinbelow with reference to the accompanying drawings, but various modifications, and additions are possible, without departing from the scope of the invention.

It will be understood that, although the terms first, second, etc. may be used herein to describe various elements, these elements should not be limited by these terms. These terms are only used to distinguish one element, from another element. For instance, a first element discussed below could be termed a second element without departing from the teachings of the present invention. Similarly, the second element could also be termed the first element.

It will be understood that when an element is referred to as being "coupled" or "connected" to another element, it can be directly coupled or connected to the other element or intervening elements may be present therebetween. In contrast, it should be understood that when an element is referred to as being "directly coupled" or "directly connected" to another element, there are no intervening elements present. Further, the terms used herein to describe a relationship between elements, for example, "between", "directly between", "adjacent", or "directly adjacent" should be interpreted in the same manner as those described above.

The terminology used herein is for the purpose of describing particular embodiments only and is not intended to be limiting. As used herein, the singular forms "a", "an", and "the" are intended to include the plural forms as well, unless the context clearly indicates otherwise. It will be further understood that the terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

Hereinafter, the present invention will be described in detail with reference to the accompanying drawings.

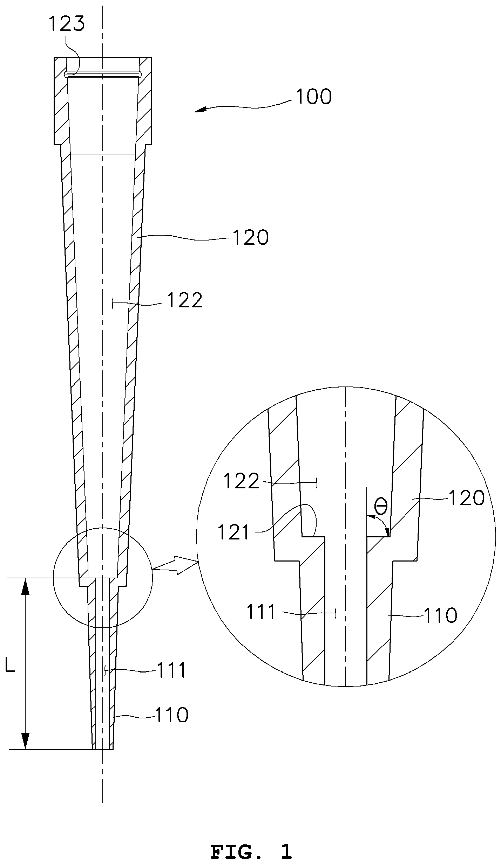

As shown in FIG. 1, an exemplary pipette tip 100 includes: a sample collection part 110 in which a capillary 111 is formed in a longitudinal direction for introducing samples; and a barrel body 120 having a sample storage chamber 122 that communicates with the capillary tube 111 through a stepped portion 121 and in which the sample is stored.

The sample collection part 110 and the barrel body 120 are integrally formed with each other and may be made of glass or plastic, but are not limited to a specific material. However, it is preferable that a material having a high rigidity be used so as not to cause deformation due to an external force.

Furthermore, in order to enable an effective capillary action of the sample collection part 110, a hydrophilic material may be used or a hydrophilic thin film may be coated on the inner circumferential surface of the capillary tube 111.

The capillary tube 111 is formed through the sample collection part 110 along the longitudinal direction of the sample collecting part and stores the sample by capillary action. Herein, a collection volume of about 5 µl to 100 µl may be possible.

The size (diameter) of the capillary tube 111 may be determined within a range in which the sample can be collected by capillary action, preferably within about 0.5 mm to 1.5 mm.

The barrel body 120 is integrally formed with the sample collection part 110 and has the sample storage chamber 122 communicating with the rear end of the capillary tube 111. The sample storage chamber 122 extends from the rear end of the capillary tube 111 through the stepped portion 121 and is larger in diameter than the capillary tube 111.

In FIG. 1, an inclination angle of the stepped portion 121 with respect to the capillary 111 is a right angle. However, it was confirmed that when the inclination angle θ is equal to or greater than 45°, a liquid sample collected by capillary action is only filled up to the capillary tube 111. Furthermore, the inclination angle θ may be equal to or greater than 90°.

The sample storage chamber 122 is formed through the center of the barrel body 120 and provides a space in which the sample is mixed with a pretreatment solution. It is preferable that the sample storage chamber 122 have a conical inclined surface that is inclined upward from the stepped portion 121.

Herein, the sample storage chamber 122 has a wide rear opening. The rear opening of the sample storage chamber may be assembled with an automated instrument having a tapered surface that corresponds to the opening by luer lock fitting. It is preferable that the sample storage chamber 122 have an annular engagement groove 123 that is formed in the inner surface thereof so as to be fitted to a protrusion protruding from the tapered surface of the automated instrument.

The pipette tip 100 configured as described above is configured such that a correct collection volume thereof is determined by the volume of the capillary tube 111 of the sample collection part 110. That is, the volume of the capillary 111 is determined by the cross-sectional area and a length L of the capillary tube 111, and a collected sample fills the capillary tube 111 below the stepped portion 121 by capillary action.

Meanwhile, in the present invention, the cross-sectional shape of the capillary tube may be variously modified in consideration of the collection volume of the pipette tip. For example, in order to increase the collection volume of the pipette tip, it is required to increase the length L of the sample collection part. However, in the present invention, the cross-sectional area of the capillary tube may be increased for a large collection volume.

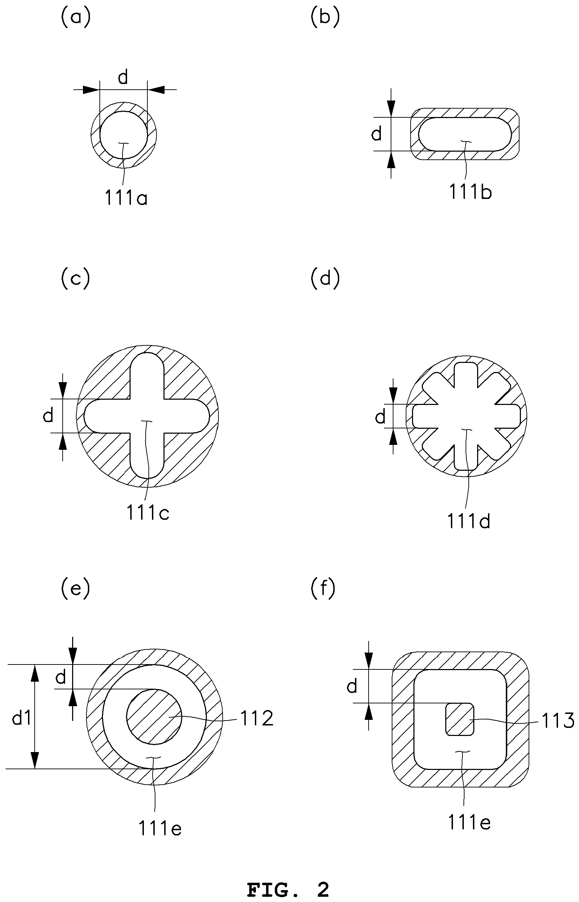

FIGS. 2a to 2f are views showing various embodiments of flat cross-section of the capillary tube of the pipette tip according to the present invention.

Referring to FIGS. 2a to 2f, a capillary tube 111a in FIG. 2a has a circular-shaped cross-section, and a capillary tube 111b in FIG. 2b has a long hole-shaped cross-section. Furthermore, a capillary tube 111c in FIG. 2c has a cross-shaped cross-section, and a capillary tube 111d in FIG. 2d has a star-shaped cross-section formed by multiple bar-shaped holes intersecting with each other at positions circumferentially spaced out at regular angular intervals.

Meanwhile, it is preferable that a size d (diameter or width) of each of the capillary tubes 111a, 111b, 111c, and 111d be determined within a range in which capillary action can be affected, for example, about 0.5 mm to 1.5 mm.

As another embodiment, FIG. 2e shows that a capillary tube 111e has an annular-shaped cross-section that is defined between a core 112 placed in a circular hole and the wall of the circular hole. Herein, a diameter d1 of the capillary tube 111e itself is larger than that of the capillary tubes of the embodiments in FIGS. 2a, 2b, 2c, and 2d. At the same time, an effective size d due to the size of the core 112 is determined within a range of 0.5 mm to 1.5 mm in which capillary action can be affected. This results in an increase in effective cross-sectional area, thus ensuring that collection of a large-volume sample can be achieved. As still another embodiment, FIG. 2f shows that a capillary tube 111e has a rectangular ring-shaped cross-section that is defined between a core 113 placed in a rectangular hole and the wall of the rectangular hole.

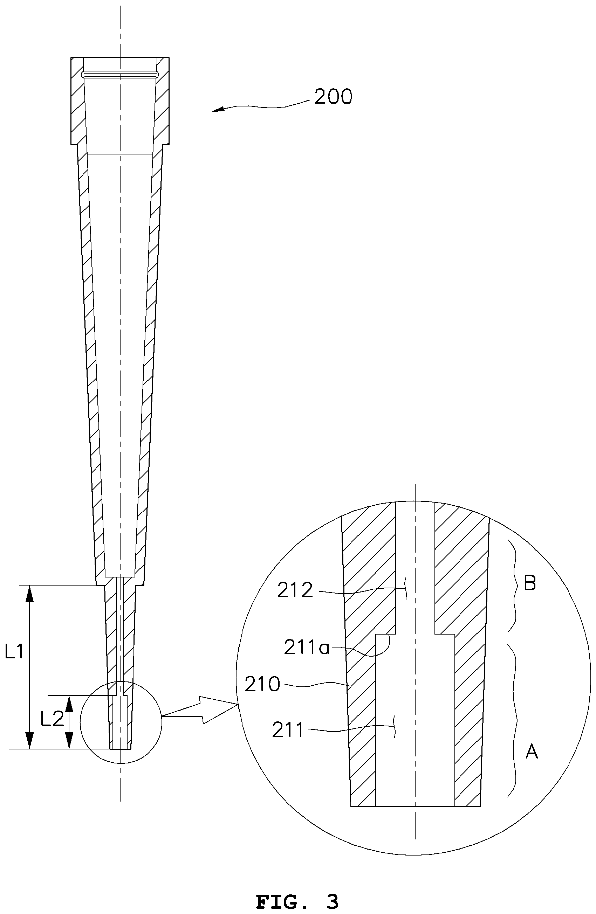

FIG. 3 is an enlarged sectional view showing a sample collection part of a pipette tip according to the present invention.

Referring to FIG. 3, capillary tubes 211 and 212 are formed in a sample collection part 210 of the pipette tip according to the present invention are comprised of a first capillary tube 211 formed in a front opening, and a second capillary tube 212 having a smaller cross-sectional area than the first capillary tube 211 and communicating therewith.

Meanwhile, it is preferable that the size (diameter or width) of the second capillary tube 212 be determined to be equal to or less than 1.5 mm such that capillary action can be affected. It is more preferable that the first capillary tube 211 and the second capillary tube 212 communicates with each other through a stepped portion 211a.

The capillary tube configured as described above is comprised of a first capillary tube section A and a second capillary tube section B, and the respective sections communicate with each other through the stepped portion. This ensures that it is possible to facilitate the design of a large-volume pipette tip or design of a pipette tip having various collection volumes, and the manufacture thereof.

In detail with reference to FIG. 1, in the case where the entire section of the capillary tube 111 has the same diameter, a pipette tip for collecting a large-volume liquid sample requires that the length of the capillary tube 111 be longer in proportion to the design volume. This may cause a problem in that, when the pipette tip is applied to an automated analyzer, occurrence of interference due to the length of the pipette tip has to be considered.

Therefore, in the present invention, as shown in FIG. 3, the pipette tip 200 for collecting a large-volume liquid sample (50 µl <) is designed such that the pipette tip is divided into at least two sections depending on the collection volume, and one of the sections formed in the front opening has a predetermined length L2 with a large diameter. This ensures that the design of a required collection volume can be achieved while limiting a total length L1 of the capillary tubes 211 and 212 to equal to or less than a predetermined length.

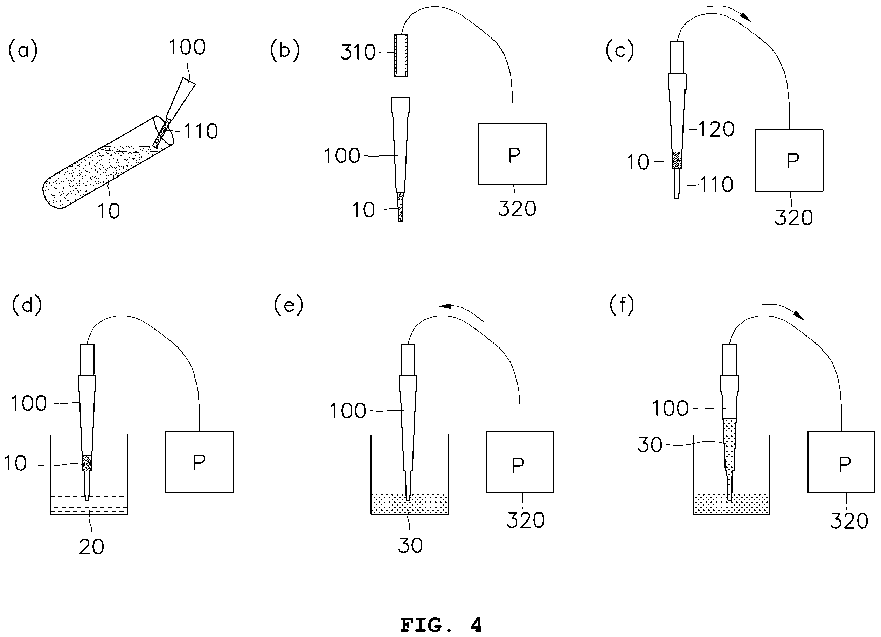

FIGS. 4a to 4f are views showing a method of using the pipette tip according to the present invention.

As shown in FIG. 4a, the sample 10 is collected with the pipette tip 100. At this time, a fixed volume of the sample 10 is accurately collected in the capillary tube of the sample collection part 110 by capillary action.

Thereafter, as shown in FIG. 4b, the pipette tip 100 having the sample 10 collected therein is mounted on a handler for controlling pressure.

The handler includes an adapter 310 having a flow path formed therethrough and assembled with the pipette tip 100, and a pump configured to generate a positive pressure or negative pressure acting on the pipette tip 100 through the adapter 310. The adapter 310 is a hollow tube and is fitted to an upper portion of the pipette tip 100, and is connected to the pump 320 through a pipe.

Thereafter, as shown in FIG. 4c, the sample in the sample collection part 110 of the pipette tip 100 is introduced into the barrel body 120 by the negative pressure generated by the handler and stored therein.

Thereafter, as shown in FIGS. 4d and 4e, the pipette tip 100 mounted on the handler is transferred into a pretreatment solution 20, and the sample 10 and the pretreatment solution 20 are mixed to obtain a mixed liquid 30. At this time, discharge of the sample 10 in the pipette tip 100 upon transfer is made by the positive pressure generated by the pump 320.

Thereafter, as shown in FIG. 4f, the mixed liquid 30 is sucked up into the pipette tip 100, and the sucked mixed liquid 30 can be dispensed at a desired position. At this time, the mixed liquid 30 is sucked up into the pipette tip 100 by the negative pressure generated by the pump 320.

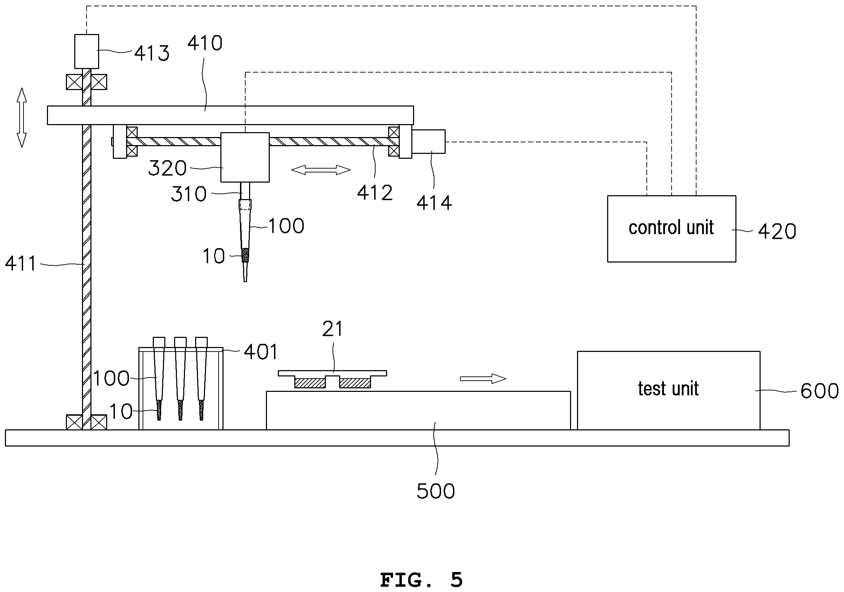

FIG. 5 is a view showing a configuration of a pipette system according to the present invention.

As shown in FIG. 5, a pipette system according to the present invention includes: a guide part for guiding movement of the adapter 310; a driving part for generating a driving force for controlling the movement of the adapter 310 along the guide part; and a control unit for controlling operations of a pump and the driving part.

In this embodiment, the adapter 310 is a module type integrally formed with the pump 320. The adapter 310 is provided at a lower surface of the pump 320 such that the pump is moved together with the adapter 310. On the other hand, the adapter may be connected to the pump by a flexible hose such that only the adapter can be moved for operation.

The guide part guides movement of the adapter 310 between a pipette tip site where multiple pipette tips 100 each having a fixed volume of a liquid sample collected therein are located, and a reagent cartridge site where a reagent cartridge 21 is located. In this embodiment, the guide part is comprised of a vertical ball screw 411, a movable frame 410 guided by the vertical ball screw 411 so as to be moved vertically, and a horizontal ball screw 412 provided horizontally at the movable frame 410 to guide a horizontal movement of the pump 320.

In this embodiment, the pipette tips 100 are stored in a rack 401 provided at a designated position in a state of having the fixed volumes of the liquid samples collected therein, and the reagent cartridge 21 is provided at a side of a transfer device 500.

The vertical ball screw 411 and the horizontal ball screw 412 are provided to be rotatable by well-known bearings. The vertical and horizontal ball screws include a first driving motor 413 and a second driving motor 414 for rotating the ball screws, respectively.

The control unit 420 controls operations of the pump 320 and the first and second driving motors 413 and 414. In detail, the control unit 420 controls the first driving motor 413 and the second driving motor 413 to control the movement position of the adapter 310. Also, the control unit moves a pipette tip 100 having a liquid sample collected therein to the reagent cartridge 21 to allow the liquid sample to be mixed with a pretreatment solution of the reagent cartridge 21 or dispensed.

Meanwhile, the control unit 420 controls the pump 320 such that an appropriate pressure acts on the pipette tip 100 in the process of moving the pipette tip 100 and mixing or dispensing the liquid sample therein, thus preventing leakage of the liquid sample that may occur in the process of moving the pipette tip, and facilitating mixing of the liquid sample with the pretreatment solution or dispensing thereof.

The reagent cartridge 21 in which the liquid sample is mixed with the pretreatment solution or dispensed is transferred to a test unit 600 by the transfer device 500 and subjected to a test.

In this embodiment, the guide part has been described as performing a biaxial movement in vertical and horizontal directions. However, it should be understood that movement in three axial directions can be performed by additional provision of a guide member and a driving source that are located in directions perpendicular to the vertical and horizontal directions.

Although the exemplary embodiments of the present invention have been disclosed for illustrative purposes, those skilled in the art will appreciate that various modifications, additions and substitutions are possible, without departing from the scope and spirit of the invention as disclosed in the accompanying claims.

**<Description of the Reference Numerals in the Drawings>**

| | | | |
|---|---|---|---|
| 100: | pipette tip | | |
| 110: | sample collection part | | |
| 111: | capillary tube | 120: | barrel body |
| 121: | stepped portion | | |
| 122: | sample storage chamber | | |
| 310: | adapter | 320: | pump |
| 410: | movable frame | | |
| 411: | vertical ball screw | | |
| 412: | horizontal ball screw | 420: | control unit |
| 500: | transfer device | 600: | test unit |

## Claims

1. A pipette tip (200), comprising:
a sample collection part (210) having a capillary tube (211,212) formed in a longitudinal direction for introducing samples; and
a barrel body having a sample storage chamber which communicates with the capillary tube (211,212) through a stepped portion and stores the samples, wherein the stepped portion has an inclination angle with the capillary tube (211,212) of equal to or greater than 45°, **characterized in that** the capillary tube (211,212) includes:
a first capillary tube (211) formed in a front opening; and
a second capillary tube (212) having a smaller cross-sectional area from that of the first capillary tube (211) and communicating therewith and with the stepped portion.

2. A pipette system, comprising:
a pipette tip according to claim 1; and
a handler configured to control pressure inside the pipette tip (200) by a pressure source that is secured to an end of the barrel body and is driven by an electrical control signal, wherein the handler includes:
an adapter (310) having a flow path formed therethrough, and fitted to an opening of the barrel body; a pump (320) controlling the pressure inside the pipette tip (200) through the adapter (310) by the electrical control signal input from outside;
a guide part guiding movement of the adapter (310) between a site where the pipette tip (200) is located and a site where a reagent cartridge (21) is located;
a driving part (413,414) generating a driving force for controlling the movement of the adapter (310) along the guide part; and
a control unit (420) generating an electrical control signal for controlling operation of the pump and the driving part.

## Patentansprüche

1. Pipettenspitze (200), welche aufweist:
einen Probensammelteil (210) mit einem in einer Längsrichtung gebildeten Kapillarrohr (211, 212) zum Einbringen von Proben und
einen Fass-Körper, welcher eine Probenspeicherkammer hat, welche mit dem Kapillarrohr (211, 212) durch einen Abgestuft-Abschnitt kommuniziert und die Proben speichert, wobei der Abgestuft-Abschnitt einen Neigungswinkel zum Kapillarrohr (211, 212) von gleich oder größer als 45° hat, **dadurch gekennzeichnet, dass** das Kapillarrohr (211, 212) aufweist:
ein erstes Kapillarrohr (211), welches in einer vorderen Öffnung gebildet ist, und
eines zweites Kapillarrohr (212), welches eine kleinere Querschnittsfläche als die des ersten Kapillarrohrs (211) hat und mit diesem sowie mit dem Abgestuft-Abschnitt kommuniziert.

2. Pipettensystem, welches aufweist:
eine Pipettenspitze gemäß Anspruch 1 und
eine Handhabungseinrichtung, welche eingerichtet ist, um den Druck innerhalb der Pipettenspitze (200) mittels einer Druckquelle zu steuern, welche an einem Ende des Fass-Körpers befestigt ist und mittels eines elektrischen Steuerungssignals betrieben wird, wobei die Handhabungseinrichtung aufweist:
einen Adapter (310), welcher einen durch ihn hindurch gebildeten Flusspfad hat, und welcher an einer Öffnung des Fass-Körpers angebracht ist, eine Pumpe (320), welche den Druck innerhalb der Pipettenspitze (200) durch den Adapter (310) mittels des von außen eingegebenen elektrischen Steuerungssignals steuert,
ein Führungsteil, welches die Bewegung des Adapters (310) zwischen einem Ort, an welchem die Pipettenspitze (200) angeordnet ist, und einem Ort, an welchem eine Reagenz-Kartusche (21) angeordnet ist, führt,
ein Antriebsteil (413, 414), welches eine Antriebskraft zum Steuern der Bewegung des Adapters (310) entlang des Führungsteils steuert, und
eine Steuerungseinheit (420), welche ein elektrisches Steuerungssignal zum Steuern des Betriebs der Pumpe und des Antriebsteils erzeugt.

## Revendications

1. Embout de pipette (200), comprenant :
une partie de collecte d'échantillon (210) ayant un tube capillaire (211, 212) formé dans une direction longitudinale pour l'introduction d'échantillons ; et
un corps de cylindre ayant une chambre de stockage d'échantillons qui communique avec le tube capillaire (211, 212) par l'intermédiaire d'une partie étagée et stocke les échantillons, dans lequel la partie étagée a un angle d'inclinaison avec le tube capillaire (211, 212) supérieur ou égal à 45°, **caractérisé en ce que** le tube capillaire (211, 212) inclut:
un premier tube capillaire (211) formé dans une ouverture avant ; et
un second tube capillaire (212) ayant une superficie en coupe inférieure à celle du premier tube capillaire (211) et communiquant avec celui-ci et avec la partie étagée.

2. Système de pipette, comprenant :
un embout de pipette selon la revendication 1 ; et
un gestionnaire configuré pour commander une pression à l'intérieur de l'embout de pipette (200) par une source de pression qui est fixée à une extrémité du corps de cylindre et est entraînée par un signal de commande électrique, dans lequel le gestionnaire inclut :
un adaptateur (310) ayant une trajectoire d'écoulement formée à travers celui-ci, et monté sur une ouverture du corps de cylindre ; une pompe (320) commandant la pression à l'intérieur de l'embout de pipette (200) à travers l'adaptateur (310) par le signal de commande électrique entré depuis l'extérieur ;
une partie de guidage guidant le mouvement de l'adaptateur (310) entre un site où se trouve l'embout de pipette (200) et un site où se trouve une cartouche de réactif (21) ;
une partie d'entraînement (413, 414) générant une force d'entraînement pour commander le mouvement de l'adaptateur (310) le long de la partie de guidage ; et
une unité de commande (420) générant un signal de commande électrique pour commander une opération de la pompe et de la partie d'entraînement.
